# EUROPÄISCHE PATENTSCHRIFT

(11) **EP 1 422 426 B1**
(45) Veröffentlichungstag und Bekanntmachung des Hinweises auf die Patenterteilung: **12.07.2006**
(21) Anmeldenummer: 03025441.1
(22) Anmeldetag: 05.11.2003
(51) Int. Cl.: F16B 5/07, B21D 39/02, B21D 5/16

(54) **Falzverbindung**
Hemmed joint
Joint serti

(30) Priorität: 21.11.2002 DE 20218094 U
(43) Veröffentlichungstag der Anmeldung: 26.05.2004
(73) Patentinhaber: W. Kreusch GmbH, 42117 Wuppertal (DE)
(72) Erfinder: Stankowiak, Gerhard, 45661 Recklinghausen (DE)
(74) Vertreter: Grünecker, Kinkeldey, Stockmair & Schwanhäusser Anwaltssozietät

(56) Entgegenhaltungen:
- WO-A-87/00591
- DE-A- 3 724 648
- GB-A- 1 170 362
- US-A- 3 074 459

## Beschreibung

Die Erfindung bezieht sich auf eine Falzverbindung zum Verbinden zweier Blechteile.

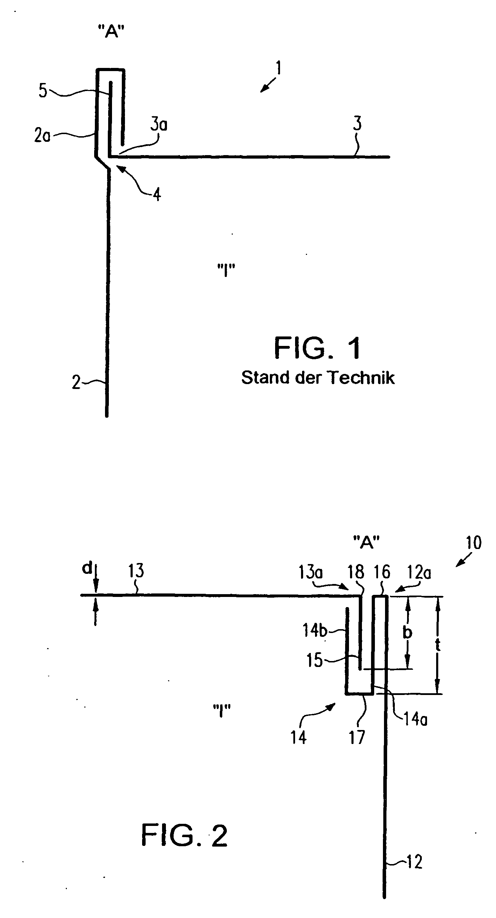

Zum Verbinden zweier Blechteile einer Blechummantelung für Isolierungen, insbesondere zum Befestigen einer Stimscheibe an einem Mantelblech wurde bisher die in Fig. 1 schematisch dargestellte Falzverbindung 1 eingesetzt. Die Falzverbindung 1 verbindet ein erstes Blechteil in Form eines Mantelbleches 2 mit einem zweiten Blechteil in Form einer Stimfläche oder Stimscheibe 3. Mantelblech 2 und Stirnscheibe 3 treffen in rechtem Winkel aufeinander, wodurch eine im Innere des Winkels liegende Innenseite I und eine außerhalb des Winkels liegende Außenseite A definiert wird. Die Innenseite I enthält Isolierungsmaterial für eine Wärme-, Kälte- und/oder Schallisolierung. Die Außenseite A ist der Umgebung zugewandt; und kann beispielsweise bewittert sein. Zum Ausbilden der Falzverbindung wird im Mantelblech 2 die dargestellte Aufnahmetasche 4 in Form einer Kastensicke ausgeformt, indem mit Hilfe einer Sickemaschine ein Randbereich 2a des Mantelbleches 2 zunächst sickenartig nach außen und anschließend wieder in Richtung der Innenseite I gebogen wird, so dass sich die Aufnahmetasche 4 zur Innenseite I öffnet. Die Stimscheibe 3 wird in ihrem Randbereich 3a in die nach außen weisende Richtung rechtwinklig abgebogen, so dass sich ein Stecksteg 5 ausbildet. Die Abmessungen der beiden Blechteile 2, 3 und die Anordnung der Aufnahmetasche 4 und des Stecksteges 5 sind so gewählt, dass die Stimscheibe 3 mit ihrem Stecksteg 5 in die Aufnahmetasche 4 eingesprengt werden muss. Dies erfordert zusätzliches Werkzeug. Auch steht die Aufnahmetasche 4 über die Isolierung vor und führt, wenn mehrere auf diese Weise aneinander gefügte Blechteile nebeneinander angeordnet werden müssen, zu unisolierten Zwischenräumen. Wird die Blechummantelung in der in Fig. 1 gezeigten vertikalen Ausrichtung einer Bewitterung ausgesetzt, so kann sich auf der Stirnfläche Wasser ansammeln, das bei genügender Standhöhe oder bei anliegendem Winddruck auch über die Aufnahmetasche 4 in das Innere gelangen kann.

Die DE-A-37 24 648 zeigt zwar eine Falzverbindung, jedoch keine Aufnahmetasche und keinen Stecksteg. Vielmehr sind die Randbereiche der beiden zu verbindenden Blechteile mit zueinander versetzten Zahnungen versehen. Die beiden Randbereiche mit den Zahnungen und einem sich daran anschließenden Streifen werden, wenn die Blechteile im Winkel aufeinanderstoßend miteinander verbunden werden sollen, nach innen gebogen, so dass die Streifen unterhalb der Zahnungen mit den anliegenden Blechteilen jeweils einen Winkel von etwa 45° aufweisen. Dann werden die Zahnungen miteinander verschränkt und glatt an die Randstreifen angelegt, gegebenenfalls unter Zwischenlage von Dichtungsmaterial. Eine solche unter 45° in den Innenraum reichende Falzverbindung ist jedoch nicht für Blechummantelungen für Isolierungen brauchbar, da derartige Blechummantelungen auf die fertige Isolierung aufgebracht werden müssen. Ist die Innenseite mit Isoliermaterial gefüllt, so bleibt kein Platz zum Verschränken der Zahnungen.

Die WO87/00591 beschreibt ein Verbindungssystem für Konstruktionselemente, das in einem Ausführungsbeispiel (Fig. 6) als Falzverbindung zweier flächiger Bauteile ausgebildet ist. Die Falzverbindung enthält zwar einen Steg und eine Aufnahmetasche, die Aufnahmetasche weist jedoch keinen am Bauteil anliegenden Begrenzungssteg der Aufnahmetasche auf. Weiterhin enthält dasjenige Bauteil, das mit der Aufnahmetasche versehen ist, einen vorspringenden Rand, der die Aufnahmetasche und den in der Aufnahmetasche aufgenommenen Steg von oben überdeckt. Außerdem erstreckt sich der Steg nicht in Richtung auf die Innenseite, sondern parallel zum anliegenden Bauteil, wodurch die Verbindung zwischen den beiden Bauteilen nicht durch ein einfaches Einstecken sondern nur dann hergestellt werden kann, wenn die beiden Bauteile durch eine Relativbewegung parallel zueinander von ihren Enden her ineinander eingeschoben werden, wie dies in Fig. 7 der Druckschrift zu sehen ist und auf S. 2, zweiter Absatz, letzter Satz, beschrieben wurde. Dadurch eignet sich jedoch die bekannte Verbindung wiederum nicht zum Verbinden von Blechteilen einer Blechummantelung für Isolierungen, da durch eine Relativverschiebung des Blechteils auf der Oberfläche der Isolierung die Isolierung verschoben oder gequetscht werden könnte.

Die US-A-3 074 459 beschreibt eine Fügeverbindung zum Zusammenbau von Luftkanälen für eine Heizung oder ein Airconditioning-System, wobei dann, wenn diese Kanäle isoliert sind, sich die Isolierung auf der Außenseite der Kanalwandung befindet. Die Fügeverbindung ist nicht als Falzverbindung ausgebildet, sondern ist eine Verriegelungsverbindung (Sp. 1, Z. 48). Die Fügeverbindung enthält eine Aufnahmetasche und einen Stecksteg, die jedoch lediglich als Träger für die Verriegelungselemente in Form eines vorstehenden Randes in der Aufnahmetasche und ausgestanzten und herausgebogenen Nocken bzw. Zungen am Stecksteg dienen. Demzufolge muss auch die Aufnahmetasche breiter sein als bei einer Falzverbindung, so dass bei Verwendung der Fügeverbindung für eine Blechummantelung dort Wasser eintreten könnte. Darüber hinaus ist der zweite Begrenzungssteg entweder gleich groß wie der erste Begrenzungssteg (Fig. 4) oder größer (Fig. 6), so dass sich im Stoßbereich zwischen den beiden Blechteilen eine Kerbe ergibt, die bei Blechummantelungen für Isolierungen einen Angriffspunkt für Korrosion darstellen könnten.

Die GB-A-1 170 362 beschreibt eine Falzverbindung zum Verbinden zweier Blechteile, die etwa der Falzverbindung gemäß Fig. 1 entspricht, mit dem Unterschied, dass kein Stecksteg vorhanden ist, sondern beide Randbereiche der Blechteile um 180° gebogen werden.

Der Erfindung liegt somit die Aufgabe zugrunde, eine einfacher zu fügende Falzverbindung für Blechteile zu schaffen, die die angegebenen Nachteile nicht aufweist.

Die Aufgabe wird durch die im Anspruch 1 angegebene Falzverbindung gelöst.

Durch die sich erfindungsgemäß nach außen öffnende Aufnahmetasche und den sich in Richtung auf die spätere Innenseite erstreckenden Stecksteg können die beiden Blechteile einfach ineinander gesteckt werden, ohne dass Einsprengwerkzeuge mit den damit verbundenen Unfallgefahren verwendet werden müssen. Bei einem senkrechten Einbau mit oben liegender Stimfläche kann sich kein Wasser mehr ansammeln.

Vorteilhafte Weiterbildungen der Erfindung sind in den Unteransprüchen beschrieben.

Ein Ausführungsbeispiel der Erfindung wird nachfolgend anhand der Zeichnungen näher erläutert. Es zeigen:
- Fig. 1: eine Falzverbindung des Standes der Technik, und
- Fig. 2: eine schematische Darstellung einer Falzverbindung gemäß der vorliegenden Erfindung.

Fig. 2 zeigt eine erfindungsgemäße Falzverbindung 10, die ein erstes Blechteil 12 in Form eines Mantelbleches mit einem zweiten Blechteil 13 in Form einer Stimscheibe oder Stimfläche verbindet, wobei die Blechteile 12, 13 bevorzugt Teil einer Blechummantelung für Wärme-, Kälte- oder Schallisolierungen sind.

Die erfindungsgemäße Falzverbindung 10 enthält eine Aufnahmetasche 14 am ersten Blechteil 12 und einen Stecksteg 15 am zweiten Blechteil 13. Die Blechteile 12 und 13 stoßen in einem Winkel von etwa 90° aufeinander, wobei innerhalb des Winkels eine Innenseite I und außerhalb des Winkels eine Außenseite A definiert wird.

Die Aufnahmetasche 14 wird durch ein einfaches, keine Materialdehnung erforderndes Umbiegen (z.B. mittels eines Falzformers) eines Randes 12a des ersten Blechteiles 12 gebildet. Zu diesem Zweck wird der Rand 12a zunächst in einer ersten Faltung 16 zur Innenseite umgelegt, wobei die Außenseite glatt bleibt. Anschließend wird der Rand 12a an einer vorbestimmten Tiefe t der Aufnahmetasche 14 in einer zweiten Faltung 17 wieder in Richtung Außenseite A gebogen. Dadurch bildet sich die Aufnahmetasche 14 mit zwei Begrenzungsstegen 14a, 14b, wobei der sich zwischen den Faltungen 16 und 17 erstreckende Begrenzungssteg 14a parallel zum Blechteil 12 verläuft und bevorzugt an diesem anliegt, und sich der zweite Begrenzungssteg 14b ebenfalls parallel zum ersten Blechteil 12 erstreckt jedoch um mindestens die Stärke d des zweiten Blechteiles 13 kürzer ist als der erste Begrenzungssteg 14a, so dass die Außenseite des ersten Blechteiles 12 im Bereich der ersten Faltung 16 im Wesentlichen mit der Außenseite des zweiten Blechteiles 13 fluchtet, wenn der Stecksteg 15 in die Aufnahmetasche 14 eingesteckt wurde.

Der Stecksteg 15 wird gebildet, indem man einen freien Randbereich 13a des zweiten Blechteiles 13 in einer Faltung 18 im Wesentlichen rechtwinklig abbiegt; und zwar zu derjenigen Seite des zweiten Blechteiles 13, die in der fertigen Falzverbindung 10 zur Innenseite I weist.

Der Stecksteg 15 weist eine Breite b in Erstreckungsrichtung auf, die gleich oder kleiner der Tiefe t der Aufnahmetasche 14 ist.

Durch die angegebenen Abmessungen bietet die Blechummantelung im Bereich der Falzverbindung 10 nach außen hin ein geschlossenes, fluchtendes Bild, so dass keine unisolierten Zwischenräume verbleiben können, wenn Blechummantelungen mit der erfindungsgemäßen Falzverbindung 10 aneinander anschließend angeordnet werden.

Zur Verbesserung der Dichtwirkung kann in die Aufnahmetasche 14 ein bekanntes Dichtmaterial (beispielsweise als Schaum oder als Materialstreifen) eingebracht werden, bevor der Stecksteg 15 in die Aufnahmetasche 14 eingedrückt wird. Der Stecksteg 15 kann weiterhin durch Ankömen oder dgl. in seiner Position der Aufnahmetasche 14 festgelegt werden.

In Abwandlung der beschriebenen und gezeichneten Ausführungsbeispiele kann beispielsweise der zweite Begrenzungssteg der Aufnahmetasche wesentlich kürzer ausgebildet sein, wenn auf andere Weise dafür gesorgt wird, dass ein Anschlag für die Einstecktiefe des zweiten Blechteiles vorhanden ist.

## Patentansprüche

1. Falzverbindung (10) zum Verbinden zweier im Winkel aufeinanderstoßender Blechteile (12, 13) einer Blechummantelung für Wärme-, Kälte- oder Schallisolierungen, wodurch eine Außenseite (A) und eine Innenseite (I) definiert wird, mit einer an einem ersten Blechteil (12) vorgesehenen Aufnahmetasche (14) und einem an einem zweiten Blechteil (13) vorgesehenen Stecksteg (15), wobei sich die Aufnahmetasche (14) zur Außenseite (A) öffnet und sich der Stecksteg (15) in Richtung auf die Innenseite (I) erstreckt, und wobei die Aufnahmetasche (14) einen ersten, am ersten Blechteil (12) anliegenden Begrenzungssteg (14a) und einen zweiten Begrenzungssteg (14b) aufweist, wobei der zweite Begrenzungssteg (14b) um wenigstens die Stärke (d) des zweiten Blechteils (13) kürzer als der erste Begrenzungssteg (14a) ist.

2. Falzverbindung nach Anspruch 1, **dadurch gekennzeichnet, dass** die Aufnahmetasche (14) auf der Innenseite (I) innerhalb des Randes (12a) des ersten Blechteils (12) angeordnet ist.

3. Falzverbindung nach Anspruch 1 oder 2, **dadurch gekennzeichnet, dass** die Aufnahmetasche (14) durch zwei Faltungen (16, 17) eines Randbereichs (12a) des ersten Blechteils (12) gebildet ist, wobei die erste Faltung (16) zur Innenseite (I) und die zweite Faltung (17), unter Ausbildung der Aufnahmetasche (14), zur Außenseite (A) erfolgt.

4. Falzverbindung nach einem der Ansprüche 1 bis 3, **dadurch gekennzeichnet, dass** die Tiefe (t) der Aufnahmetasche (14) im Wesentlichen der Breite (b) des Stecksteges (15) in Erstreckungsrichtung entspricht.

5. Falzverbindung nach einem der Ansprüche 1 bis 4, **dadurch gekennzeichnet, dass** der Stecksteg (15) durch eine Faltung (18) des Randbereichs (13a) des zweiten Blechteils (13) gebildet ist.

6. Falzverbindung nach einem der Ansprüche 3 bis 5, **dadurch gekennzeichnet, dass** die Außenseite der ersten Faltung (16) mit der Außenseite des zweiten Blechteils (13) in einem sich an den Stecksteg (15) anschließenden Bereich im Wesentlichen fluchtend ausgerichtet ist.

7. Falzverbindung nach einem der Ansprüche 1 bis 6, **dadurch gekennzeichnet, dass** die Aufnahmetasche (14) ein Dichtungsmittel enthält.

8. Falzverbindung nach einem der Ansprüche 1 bis 7, **gekennzeichnet durch** ihre Ausbildung zum Verbinden einer Stirnfläche (13) mit einem Mantelblech (12) einer Blechummantelung.

## Claims

1. Folded seam connection (10) for joining two sheet metal parts (12, 13) which mutually contact at an angle, of a sheet metal cover for heat, cold or sound insulation, whereby an outside (A) and an inside (I) are defined, with a receiving pocket (14) provided on a first sheet metal part (12) and a guide pin (15) provided on a second sheet metal part (13), wherein the receiving pocket (14) opens to the outside (A) and the guide pin (15) extends in the direction of the inside (I), and wherein the receiving pocket (14) comprises a first limiting pin (14a) abutting the first sheet metal part (12) and has a second limiting pin (14b), wherein the second limiting pin (14b) is shorter than the first limiting pin (14a) by at least the thickness (d) of the second sheet metal part (13).

2. Folded seam connection according to claim 1, **characterised in that** the receiving pocket (14) is arranged on the inside (I) within the edge (12a) of the first sheet metal part (12).

3. Folded seam connection according to claim 1 or 2, **characterised in that** the receiving pocket (14) is formed by two folds (16, 17) of an edge region (12a) of the first sheet metal part (12), wherein the first fold (16) is performed on the inside (I) and the second fold (17) is performed on the outside (A), with the formation of the receiving pocket (14).

4. Folded seam connection according to one of claims 1 to 3, **characterised in that** the depth (t) of the receiving pocket (14) corresponds substantially to the width (b) of the guide pin (15) in the extension direction.

5. Folded seam connection according to one of claims 1 to 4, **characterised in that** the guide pin (15) is formed by a fold (18) of the edge region (13a) of the second sheet metal part (13).

6. Folded seam connection according to one of claims 3 to 5, **characterised in that** the outside of the first fold (16) is aligned substantially flush with the outside of the second sheet metal part (13) in a region adjoining the guide pin (15).

7. Folded seam connection according to one of claims 1 to 6, **characterised in that** the receiving pocket (14) contains a sealant.

8. Folded seam connection according to one of claims 1 to 7, **characterised by** its configuration for joining a front face (13) to a sheet metal jacket (12) of a sheet metal cover.

## Revendications

1. Assemblage par agrafage (10) pour l'assemblage de deux parties de tôle (12, 13) juxtaposées en angle d'une enveloppe de tôle pour des isolations vis-à-vis de la chaleur et du froid ou du son, un côté extérieur (A) et un côté intérieur (I) étant définis, avec une poche de logement (14) prévue sur une première partie en tôle (12) et une nervure à emboîtement (15) prévue sur une seconde partie en tôle (13), la poche de logement (14) s'ouvrant sur le côté extérieur (A) et la nervure à emboîtement (15) s'étendant en direction du côté intérieur (I), et la poche de logement (14) présentant une première nervure de délimitation (14a) contiguë à la première partie en tôle (12) et une seconde nervure de délimitation (14b), la seconde nervure de délimitation (14b) étant plus courte d'au moins l'épaisseur (d) de la seconde partie en tôle (13) que la première nervure de délimitation (14a).

2. Assemblage par agrafage selon la revendication 1, **caractérisé en ce que** la poche de logement (14) est disposée sur le côté intérieur (I) à l'intérieur du bord (12a) de la première partie en tôle (12).

3. Assemblage par agrafage selon la revendication 1 ou 2, **caractérisé en ce que** la poche de logement (14) est formée par deux agrafages (16, 17) d'une zone de bordure (12a) de la première partie en tôle (12), le premier agrafage (16) s'effectuant avec le côté intérieur (I) et le second agrafage (17) s'effectuant, en formant la poche de logement (14), avec le côté extérieur (A).

4. Assemblage par agrafage selon l'une quelconque des revendications 1 à 3, **caractérisé en ce que** la profondeur (t) de la poche de logement (14) correspond sensiblement à la largeur (b) de la nervure à emboîtement (15) dans la direction d'extension.

5. Assemblage par agrafage selon l'une quelconque des revendications 1 à 4, **caractérisé en ce que** la nervure à emboîtement (15) est formée par un agrafage (18) de la zone de bordure (13a) de la seconde partie en tôle (13).

6. Assemblage par agrafage selon l'une quelconque des revendications 3 à 5, **caractérisé en ce que** le côté extérieur du premier agrafage (16) avec le côté extérieur de la seconde partie en tôle (13) est orienté sensiblement en alignement dans une zone consécutive à la nervure à emboîtement (15).

7. Assemblage par agrafage selon l'une quelconque des revendications 1 à 6, **caractérisé en ce que** la poche de logement (14) contient un moyen d'étanchéité.

8. Assemblage par agrafage selon l'une quelconque des revendications 1 à 7, **caractérisé par** sa réalisation pour assembler une face frontale (13) avec une tôle d'enveloppe (12) d'une enveloppe en tôle.
